Europäisches Patentamt

European Patent Office

Office européen des brevets

(11) Publication number: **0 198 095**
**B1**

# EUROPEAN PATENT SPECIFICATION

(45) Date of publication of patent specification: **01.08.90**

(51) Int. Cl.⁵: **H 02 K 1/24, H 02 K 1/32**

(21) Application number: **85104366.1**

(22) Date of filing: **11.04.85**

(54) Rotor of alternator mounted on vehicle.

(43) Date of publication of application:
**22.10.86 Bulletin 86/43**

(45) Publication of the grant of the patent:
**01.08.90 Bulletin 90/31**

(84) Designated Contracting States:
**DE FR GB IT**

(56) References cited:
**EP-A-0 008 250**
**EP-A-0 052 383**

**PATENT ABSTRACTS OF JAPAN, vol. 7, no. 76 (E-167)1221r, 30th March 1983; & JP - A - 58 3543 (TOKYO SHIBAURA DENKI K.K.) 10-01-1983**

(73) Proprietor: **NIPPONDENSO CO., LTD.**
**1-1, Showa-cho**
**Kariya-shi Aichi-ken (JP)**

(72) Inventor: **Nakamura, Shigenobu**
**21-2, Torii Kamishigehara-cho**
**Chiro-shi Aichi-ken (JP)**
Inventor: **Nimura, Takayasu**
**1-1905, Hara Tenpaku-ku**
**Nagoya-shi Aichi-ken (JP)**
Inventor: **Hotta, Toshiaki**
**1-5, Nadaka Yokone-cho**
**Oubu-shi Aichi-ken (JP)**

(74) Representative: **Klingseisen, Franz, Dipl.-Ing. et al**
**Dr. F. Zumstein sen. Dr. E. Assmann Dr. F. Zumstein jun. Dipl.-Ing. F. Klingseisen**
**Bräuhausstrasse 4**
**D-8000 München 2 (DE)**

Courier Press, Leamington Spa, England.

## Description

The invention relates to a vehicle-mounted alternator having a rotor including a pair of Randel-type pole cores.

Japanese Patent Laid-Open No. 79455/1983 discloses an example of the construction of a rotor of a vehicle mounted alternator, improved to provide a greater cooling effect. In this alternator rotor, a pair of rotor cores, each having pole cores in the form of a plurality of axially projecting claws, are fixed to the rotor shaft such that exciting coils fixed to a yoke are clamped between the pair of rotor cores. The pole core arrangement in which the pole cores of a pair of rotor cores oppose and mesh each other is generally referred to as "Randel-type Pole Core". The embodiment disclosed in the above-mentioned Japanese patent Laid-Open No. 79455/1983 is intended for reducing the air flow resistance to increase the flow rate of the cooling air, and the alternator disclosed therein meets this requirement.

EP—A—0 008 250 discloses a rotor having a spacer made of a non-magnetic material and disposed between adjacent pole shoes in such a manner as to provide a substantially smooth cylindrical outer peripheral surface of the portion of said rotor facing the corresponding stator. In this embodiment the amounting of the rotor is troublesome due to the individual spacers which must be disposed between adjacent pole shoes.

It is the object of the invention to improve the rotor of an alternator of the above mentioned kind in such a way that the mounting of the rotor is simplified.

This object is achieved by the features in claim 1. The mounting of the rotor is mainly simplified by the ring-shaped spacer which is disposed between adjacent pole core claws.

An example of the invention will be described in more detail in connection with the drawing.

Fig. 1 is a schematic illustration of the whole construction of an alternator to which the invention is applied;

Fig. 2 is a schematic illustration showing a part of the arrangement of the stator and the rotor of the alternator shown in Fig. 1;

Fig. 3 is a perspective view of a ring member mounted between the pole cores of a first embodiment in accordance with the invention;

Fig. 4 is a perspective view of a rotor on which the ring member shown in Fig. 3 is mounted;

Fig. 5 is a sectional view taken along the line V—V of Fig. 4;

Fig. 6 is a side elevational view of a portion of the ring member used in the first embodiment;

Fig. 7 is a sectional view taken along the line VII—VII of Fig. 6;

Fig. 8 is a sectional view taken along the line VIII—VIII of Fig. 7;

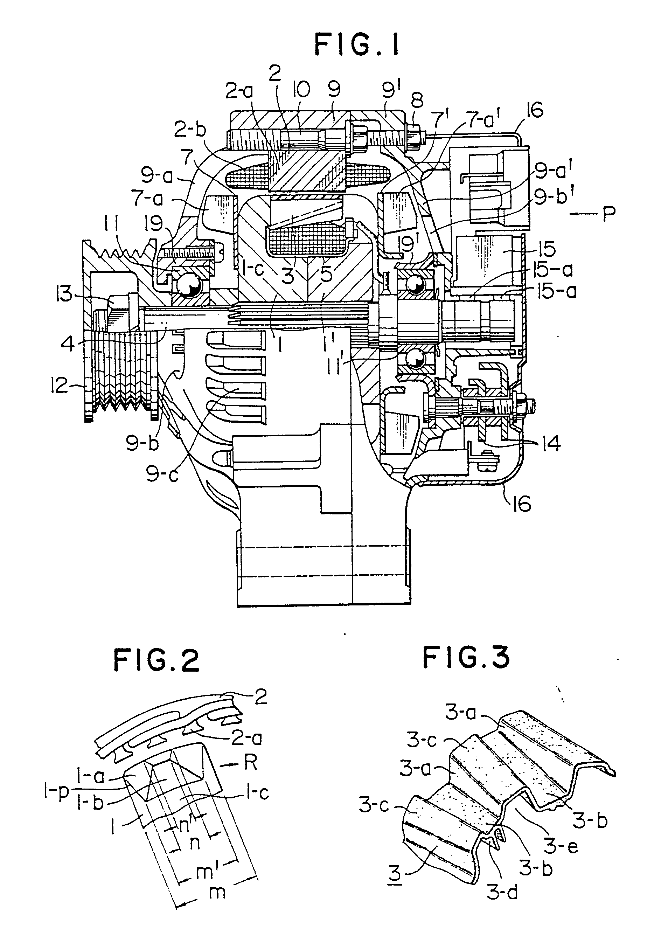

Fig. 1 is an illustration of the construction of an alternator to which the invention is applied, while Fig. 2 shows a portion of the alternator to illustrate the arrangement of the stator and pole core in the alternator. The alternator has a shell constituted by a pair of frames 9, 9' each having a bowl-like form. The frames 9,9' are jointed together at their open end surfaces and are fixed to each other by a plurality of stud bolts 10 and cooperating nuts 8 (only one stud bolt and one nut are shown). A stator 2 is fixed to the inner peripheral surface of the frame 9 by means of said stud bolts 10. The stator 2 is composed of a stator core 2-a and a stator coil 2-b wound on the stator core 2-a. As well known to those skilled in the art, the stator core 2-a has a plurality of pole teeth (referred to simply as "pole teeth", hereinunder) on the inner peripheral surface thereof. Tubular bearing boxes 19, 19' are formed on the central portions of side surfaces of both frames 9,9' so as to project therefrom inwardly of the alternator. These bearing boxes 19, 19' hold bearings 11, 11' which carry a shaft 4 rotatably. A pair of claw-type pole cores 1, 1' are mechanically fixed to the shaft 4 so as to be housed by the stator. The pole cores 1, 1' clamp there-between a rotor coil 5 which is known per se. Centrifugal fans 7, 7' having a diameter smaller than the inside diameter of the stator are fixed by suitable means to the outer sides of the pole cores 1,1' such that the vanes 7-a, 7-a' of the fans 7, 7' project axially away from the pole cores 1,1'. The fan 7 is of the slant-flow type having vanes 7-a inclined forwardly as viewed in the direction of rotation so that it forcibly supplies the cooling air into the pole cores 1, 1'.

On the opposing surfaces of the pair of end frames 9,9' are formed shrouds 9-a, 9-a' opposing the vanes 7-a, 7-a' of the fans 7, 7' across a small gap so as to serve as guide vanes for the fans 7, 7'. Suction windows 9-b, 9-b' are formed in the portions of the both end frames 9, 9' adjacent to the bearings 11, 11' on the both end frames 9,9' so that cooling air is induced by the fans 7, 7' through these suction windows 9-b, 9-b'. Discharge windows 9-c, 9-c' for outgoing heated air are formed in the portions of the end frames 9, 9' confronting the outer periphery of the stator coil 2-b. (The discharge window 9-c' is omitted from the drawings.)

A pulley 12 disposed outside the end frame is coupled by a nut 13 to the end of the shaft 4 projected to the outside of the bearing 11. The pulley 12 and, hence, the shaft 4 is adapted to be driven by an engine (not shown). Electric parts such as a diode fin 14 having a diode (not shown), a brush holder 15 having brushes 15-a for supplying the rotor coil with exciting current, and an IC regulator (not shown) for regulating the output voltage are fixed to the outer side of the frame 9' and is covered by a rear cover 16. The rear cover 16 is formed in such a manner as to surround the diode fin 14, brush holder 15 and the regulator, and is provided in its side wall with holes through which cooling air is supplied to cool the regulator and the diode fin. In Fig. 2, a symbol R represents the direction of rotation of the rotor.

An explanation will be made hereinunder as to an embodiment of the alternator rotor of the invention. Referring to Fig. 2, in order to avoid any leakage of magnetic flux between the pole claws and to ensure an effective application of the magnetic flux to the stator 2, the claws 1-p, 1-p' of the pole cores 1, 1' of the rotor have inside widths m', n' smaller than the outside widths m, n both at the base and extreme ends thereof.

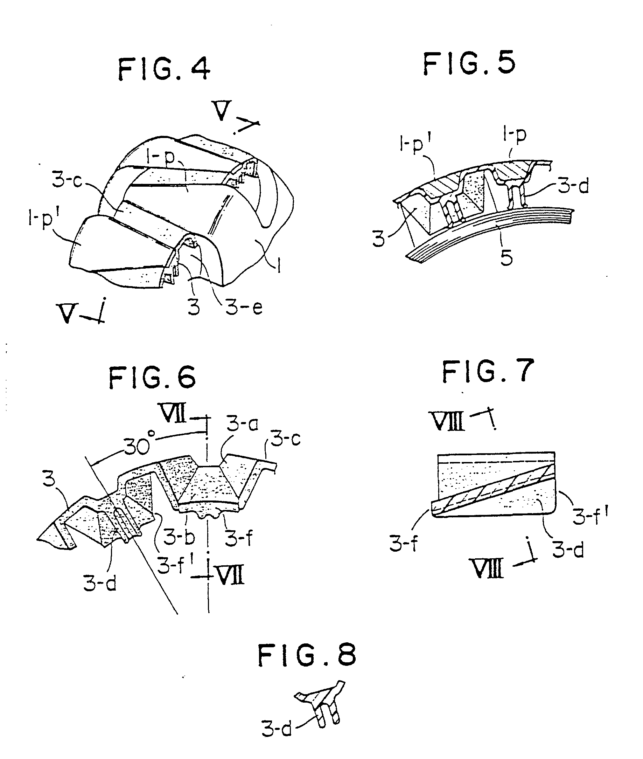

In the rotor in accordance with the invention, a plastic ring 3 is mounted to fill the gaps between adjacent claws 1-p, 1-p' of the pole cores 1, 1' and the gaps between back surfaces 1-b of the claws (see Fig. 2) and the rotor coil 5, in a manner as shown in Figs. 4 and 5. The plastic ring 3 has a configuration as shown in Figs. 3 and 6. Namely, the plastic ring 3 has a continuous ring-like form constituted by a claw-back plate 3-b and claw-side plates 3-a which are shaped to embrace the back surface 1-b and both side surfaces 1-a of each claw 1-p, and curved outer peripheral plate 3-c which fills the outer peripheral space between opposing claws 1-p, 1-p'. Ribs 3-d are extended radially inwardly from the claw-back plate 3-b towards the center of the rotor coil 5. As will be seen from Fig. 6, ribs 3-d are disposed at 30° interval. The plastic ring 3 is fixed axially between the side surfaces 1-c, 1-c' (side surface 1-c' not shown) of base ends of the pair of pole cores 1, 1' and the end surfaces 3-f, 3-f' of the claw-back plates 3-b, while the ribs 3-d are fixed to the radially outer end of the rotor coil 5 and the back surface 1-b of the pole core mechanically in such a manner as to leave a certain tightening margin. The axial width of the resin ring 3 should be, at the smallest, such that the convexities and concavities in the outer periphery of the pole core claws 1-p, l-p' opposing the teeth 2-a of the stator 2 are eliminated when the ring 3 is mounted between the pole cores 1, 1'. The plastic ring 3 is so shaped as to form spaces 3-e between the outer peripheral plates 3-c and the rotor coil 5. The air induced by the centrifugal fans 7-a, 7-a' flows through these spaces 3-e.

The operation of the vehicle-mounted alternator itself is well known and, therefore, will be explained only briefly. Exciting current is supplied to the rotor coil 5 through brushes 15-a and slip ring. At the same time, the pulley 12 is driven by the engine to rotate the rotor coil 5, so that an alternating voltage E is induced in the stator coil 2-b. The output voltage is rectified by a rectifier and is regulated by the regulator, as is well known.

The alternator rotor of the invention produces the following effect.

When the shaft 5 rotates, the cooling fans 7-a, 7-a' on both sides of the pole cores 1, 1' are rotated to induce ambient air of low temperature through the suction windows 9-b, 9-b'. The air first cools the bearings 11, 11' and then cools the stator coil 2-b. The heated air is discharged through the discharge window 9-c. A part of the cooling air is forced to flow towards the pole cores 1, 1' so as to absorb heat from the rotor coil 5 and to cool the stator coil 2-b before it leaves the alternator through the discharge window 9-c.

When a part of the cooling air passes the area around the pole cores 1, 1', particularly in the current high-speed alternator, the side surfaces 1-a of the pole core claws 1-p act as fan blades to produce centrifugal flow of air to cause a pulsation of air pressure in the area between the stator 2 and the pole cores 1, 1', thus generating unfavourable windage noise due to interference between the opposing convexities and concavities of the stator teeth 2-a and the slots. This problem, however, can be overcome by the invention. Namely, in the alternator having the rotor in accordance with the invention, the spaces between the side surfaces of adjacent pole core claws are filled by the plastic ring 3 which provides a smooth cylindrical outer peripheral surface of the pole core claws 1-p, 1-p' having no substantial convexities and concavities, so that the side surfaces 1-a of the pole core claws does not produce centrifugal fan effect, so that the generation of the windage noise due to the centrifuged air and the convexities and concavities presented by the stator teeth 2-a is avoided.

In addition, the claw-back plates 3-b of the plastic ring 3 covers the back surfaces 1-b of the pole cores to provide a sufficient insulation between the outer peripheral surface of the pole core and the inner peripheral surface of the pole core claws 1, so that the rotor coil 5 can be formed at a sufficiently large space factor. The plastic ring 3 can be stably and securely held because it is fitted with tightening margin between two pole cores 1, 1' and between the back surface 1-b of the pole claws and the rotor coil 5. In addition, since the claw-back plates 3-b abutting the back surfaces 1-b of the pole core claws are formed integrally with the curved outer peripheral plates 3-c, the undesirably breaking and separation of the curved outer peripheral plates 3-c due to centrifugal force is avoided advantageously.

Since spaces 3-e are formed at the inner side of the outer peripheral plates 3-c of the ring 3, the cooling air induced by the cooling fans 7 during rotation of the rotor coil 5 is allowed to flow axially as in the case of the conventional alternator rotor despite the presence of the plastic ring 3, so that the rotor coil 5 can be cooled sufficiently.

In the embodiment of the invention, the whole part of the air can flow through the passage between the pole core claws 1-p, 1-p' so that the rotor coil 5 can be cooled effectively.

Although in the described embodiment the ring 3 is made of a plastic, this is not exclusive and the ring 3 may be shaped from a non-magnetic material such as aluminum, stainless steel or the like by a press, cold forging or the like, followed by a coating with an electrically insulating paint.

In the illustrated embodiment, the ribs 3-d for pressing the pole core claws 1-p, 1-p' has a split form consisting of two radially inward projections. The rib 3-d, however, can be composed of a single projection or three or more projections. The ring 3 itself may be composed of a plurality of separate segments, although in the described embodiment it is an integral member.

**Claims**

1. In a vehicle-mounted alternator having a rotor including a pair of Randel-type pole cores (1, 1') having mutually meshing claws (1-p, 1-p') and an exciting coil (5) provided at the inner side of said pole cores, and a stator (2) having teeth extending radially inwardly to oppose said rotor:

an improved rotor construction comprising: a plurality of outer peripheral plates (3-c) made of a non-magnetic material disposed between adjacent pole core claws (1-p, 1-p') of said pole cores in such a manner as to provide a substantially smooth cylindrical outer peripheral surface of the portion of said rotor facing said teeth of said stator (2), and a plurality of connecting portions (3-b, 3-a) connecting adjacent outer peripheral plates (3-c),

said outer peripheral plates (3-c) and said connecting portions (3-a, 3-b) being made integrally with each other so that said outer peripheral plates (3-c) and said connecting portions (3-a, 3-b) make a ring-shaped spacer and wherein said connecting portions (3-a, 3-b) are disposed inside of said pole core claws (1-p, 1-p') and are contacted with the side surfaces (1-a, 1-a') and the inner surfaces (1-b) of said pole core claws (1-p, 1-p').

2. A rotor construction according to claim 1, wherein said outer peripheral plates (3-c) are curved substantially corresponding to an outer peripheral surface of said pole core claws (1-p, 1-p').

3. A rotor construction according to claim 1, wherein spaces constituting passages (3-e) for the cooling air are formed between the inner peripheral surface of said spacer (3) and the outer peripheral surface of said exciting coil (5).

4. A rotor construction according to claim 1, wherein said spacer (3) has ribs (3-d) integrally extending inwardly from said connecting portion (3-b), and said ribs are held with a tightening margin between the inner surface (1-b) of said pole core claws (1-p, 1-p') and the outer peripheral surface of said exciting coil (5).

**Patentansprüche**

1. In einem auf einem Fahreug montierten Generator mit einem Rotor, der zwei Polkerne (1, 1') vom Randel-Typ aufweist, die mit gegenseitig ineinander greifenden Klauen (1-p, 1-p') und einer Erregerspule (5) auf der Innenseite der Polkerne versehen sind, und mit einem Stator (2) der Zähne aufweist, die sich radial nach innen gegenüber dem Rotor erstrecken, umfaßt ein verbesserter Rotoraufbau:

eine Anzahl von äußeren Umfangsplatten (3-c) aus einem nicht magnetischen Material, die zwischen angrenzenden Polkernklauen (1-p, 1-p') der Polkerne in der Weise angeordnet sind, daß sich eine im wesentlichen glatte zylindrische Außenumfangsfläche des Abschnitts des Rotors ergibt, der den Zähnen des Stators (2) gegenüber liegt, und

eine Anzahl von Verbindungsabschnitten (3-b, 3-a), die aneinandergrenzende äußere Umfangsplatten (3-c) verbinden,

wobei die äußeren Umfangsplatten (3-c) und die Verbindungsabschnitte (3-a, 3-b) einstückig miteinander ausgebildet sind, so daß die äußeren Umfangsplatten (3-c) und die Verbindungsabschnitte (3-a, 3-b) einen ringförmigen Abstandhalter bilden, und wobei die Verbindungsabschnitte (3-a, 3-b) auf der Innenseite der Polkernklauen (1-p, 1-p') angeordnet sind und an den Seitenflächen (1-a, 1-a') und den Innenflächen (1-b) der Polkernklauen (1-p, 1-p') anliegen.

2. Rotoraufbau nach Anspruch 1, bei dem die äußeren Umfangsplatten (3-c) im wesentlichen entsprechend einer äußeren Umfangsfläche der Polkernklauen (1-p, 1-p') gekrümmt sind.

3. Rotoraufbau nach Anspruch 1, bei dem Räume bildende Durchlässe (3-e) für Kühlluft zwischen der inneren Umfangsfläche des Abstandhalters (3) und der äußeren Umfangsfläche der Erregerspule (5) ausgebildet sind.

4. Rotoraufbau nach Anspruch 1, bei dem der Abstandhalter (3) Rippen (3-d) aufweist, die aus einem Stück mit den Verbindungsabschnitten (3-b) bestehen und sich von diesen aus nach innen erstrecken, wobei diese Rippen mit einem Halterand zwischen der Innenfläche (1-b) der Polkernklauen (1-p, 1-p') und der Außenumfangsfläche der Erregerspule (5) gehalten sind.

**Revendications**

1. Dans une génératrice montée sur véhicule et comprenant un rotor comportant une paire de noyaux polaires du type Randel (1, 1') comportant des griffes (1-p, 1-p') en prise mutuelle et un bobinage d'excitation (5) prévu sur le côté interne desdits noyaux polaires, et un stator (2) comprenant des dents s'étendant radialement vers l'intérieur et face audit rotor; construction de rotor perfectionné comprenant: plusieurs plaques périphériques externes (3-c) réalisées en un matériau non magnétique et disposées entre griffes de noyaux polaires adjacents (1-p, 1-p') desdits noyaux polaires de manière à constituer une surface périphérique externe cylindrique sensiblement lisse de la portion dudit rotor qui est face auxdites dents dudit stator (2), et plusieurs portions de connexion (3-b, 3-a) reliant des plaques périphériques externes adjacentes portions de connexion (3-a, 3-b) étant réalisées d'un seul tenant entre elles de manière que lesdites plaques périphériques externes (3-c) et lesdites portions de connexion (3-a, 3-b) constituent un élément d'écartement en forme de bague, et dans lequel lesdites portions de connexion (3-a, 3-b) sont disposées à l'intérieur desdites griffes de noyau polaire (1-p, 1-p') et sont amenées en contact avec les surfaces latérales (1-a, 1-a') et les surfaces internes (1-b) desdites griffes de noyau polaire (1p, 1p').

2. Construction de rotor selon la revendication 1, dans laquelle lesdites plaques périphériques externes (3-c) sont incurvées de façon à correspondre sensiblement à la surface périphérique externe desdites griffes de noyau polaire (1p, 1p').

3. Construction de rotor selon la revendication 1, dans laquelle les espaces constituant des passages (3—e) pour l'air de refroidissement sont formés entre la surface périphérique interne dudit élément d'écartement (3) et la surface périphérique externe dudit bobinage d'excitation (5).

4. Construction de rotor selon la revendication 1, dans laquelle ledit élément d'écartement (3) comprend des nervures (3-d) s'étendant d'un seul tenant vers l'intérieur à partir de ladite portion de connexion (3-b), et lesdites nervures sont maintenues en disposant d'une marge de serrage entre la surface interne (1-b) desdites griffes de noyau polaire (1-p, 1-p') et la surface périphérique externe dudit bobinage d'excitation (5)

# FIG.1

# FIG.2

# FIG.3

# FIG. 4

V

3-c

I-p

I-p'

3

3-e

V

1

# FIG. 5

I-p'

I-p

3-d

3

5

# FIG. 6

VII

30°

3-a

3-c

3

3-b

3-f

3-d

3-f'

VII

# FIG. 7

VIII

3-f

3-f'

3-d

VIII

# FIG. 8

3-d